Europäisches Patentamt

European Patent Office

Office européen des brevets

(11) Veröffentlichungsnummer: **0 210 389**
**A2**

(12) # EUROPÄISCHE PATENTANMELDUNG

(21) Anmeldenummer: **86107799.8**

(22) Anmeldetag: **07.06.86**

(51) Int. Cl.⁴: **C 07 F 7/22**
**A 01 N 55/04**

(30) Priorität: **27.07.85 DE 3527048**

(43) Veröffentlichungstag der Anmeldung:
**04.02.87 Patentblatt 87/6**

(84) Benannte Vertragsstaaten:
**BE CH DE FR GB LI NL SE**

(71) Anmelder: **SCHERING AKTIENGESELLSCHAFT Berlin
und Bergkamen
Waldstrasse 14 Postfach 15 40
D-4709 Bergkamen(DE)**

(72) Erfinder: **Landsiedel, Horst
Augustin-Wibbelt-Strasse 18
D-4750 Unna(DE)**

(72) Erfinder: **Plum, Hans, Dr. Dipl.-Chem.
Sulkshege 12
D-4700 Hamm(DE)**

(54) Biozide Tributylzinnverbindungen.

(57) Die Erfindung betrifft Tri-n-butylzinnverbindungen, die erhältlich sind durch Umsetzung von Tri-n-butylzinnoxid oder Tri-n-butylzinnhalogeniden mit zweiwertigen Alkoholen mit einer mittleren Hydroxylzahl von ca. 200 und einem mittleren Äquivalentgewicht von ca. 280, die durch Hydrierung von dimeren Fettsäuren bzw. durch Polymerisation von ungesättigten Fettalkoholen erhalten werden, sowie biozide Mittel, die diese Verbindungen als aktiven Wirkstoff enthalten.

EP 0 210 389 A2

Biozide Tributylzinnverbindungen

Tributylzinnverbindungen, z. B. Tri-n-butylzinnoxid und
Tri-n-butylzinnester von Carbonsäuren, besitzen eine
hohe biozide Wirkung gegen Pilze und Bakterien. Sie werden
daher in großem Umfang als Wirkstoffe zur bioziden Ausrüstung von vielen Materialien und als Konservierungs-
oder Desinfektionsmittel verwendet. Die biozide Wirkung
der Tributylzinnverbindungen beschränkt sich nicht nur auf
Mikroorganismen, sie umfaßt auch bestimmte Meeresorganismen. Diese Verbindungen verhindern daher in Antifoulingfarben einen schädlichen Bewuchs des Unterwasserschiffes
mit Seepocken, Muscheln oder Algen.

Ein bedeutendes Anwendungsgebiet für Triorganozinnverbindungen ist der Schutz von frisch geschlagenem oder verbautem Holz vor Befall durch holzschädigende Pilze. Aufgrund
ihrer starken Wirksamkeit und ihres breiten Wirkungsspektrums werden Tributylzinnverbindungen in großem Umfang als
Fungizide in Holzschutzmitteln eingesetzt.

Bei den bislang verwendeten Organozinnverbindungen handelt
es sich im wesentlichen um Tri-n-butylzinnoxid bzw. Tri-n-
butylzinnester organischer Säuren, wie Tri-n-butylzinnbenzoat, -linoleat oder -naphthenat. Gewöhnlich benutzt man
Lösungen dieser Stoffe in organischen Lösungsmitteln. Doch
lassen sich mit Hilfe von Emulgatoren auch wäßrige Tributylzinnzubereitungen herstellen. Die Tributylzinnverbindungen sind bereits in sehr niedrigen Konzentrationen
wirksam.

Maßgebend für die Wirksamkeit der verschiedenen Tributylzinnverbindungen ist in der Regel der Zinngehalt. Da
dieser bei Tri-n-butylzinnestern langkettiger Carbonsäuren
niedriger liegt als bei Tri-n-butylzinnoxid, müssen bei
Verwendung derartiger Ester zur Erzielung der gleichen
Wirkung entsprechend höhere Mengen aufgewendet werden.

...

Eine spezifische, von der Natur der verwendeten Carbonsäure abhängige biozide Wirkung ist daher bei Tri-n-butylzinnverbindungen nicht bekannt geworden.

Die biozide Wirkung von Holzschutzmitteln läßt sich durch die sogenannten Grenzwerte ausdrücken, wobei der untere Wert die Konzentration darstellt, bei der gerade noch ein Pilzangriff erfolgt und der obere die Konzentration ist, bei der kein Angriff mehr erfolgt.

So liegen die Grenzwerte nach DIN 52 176 gegen einen typischen holzzerstörenden Pilz (Coniophora puteana) für Tri-n-butylzinnoxid bei 0,34 - 0,70 kg/m³ Holz und für Tri-n-butylzinnlinoleat entsprechend höher bei 0,92 - 1,3 kg/m³.

Von großer Bedeutung für die Verwendbarkeit von Bioziden als Holzschutzmittel ist ihre Dauerbeständigkeit. Die Mittel sollen dem damit behandelten Holz einen möglichst lang anhaltenden Schutz gegen mikrobiellen Angriff verleihen. Grundsätzlich handelt es sich bei Tributylzinnverbindungen um recht beständige Stoffe, mit denen man Holzschutzmittel mit guter Dauerwirkung herstellen kann. Unter bestimmten Bedingungen, wie höhere Temperatur bzw. Einwirkung spezieller Holzinhaltsstoffe, können sie aber unter Abspaltung von Butylgruppen zu biologisch weniger wirksamen zinnorganischen Verbindungen abgebaut werden.

Ein wesentlicher Faktor für die Beständigkeit von Holzschutzmitteln ist die thermische Beständigkeit der Wirkstoffe. Biozid ausgerüstetes Holz, das der Witterung ausgesetzt ist, kann bei Sonnenbestrahlung über einen längeren Zeitraum auf über 70 °C aufgeheizt werden.

...

Es wurde nun überraschend gefunden, daß sich Tri-n-butylzinnverbindungen, die erhältlich sind durch Umsetzung von Tri-n-butylzinnoxid oder Tri-n-butylzinnhalogeniden mit zweiwertigen Alkoholen mit einer mittleren Hydroxylzahl von ca. 200 und einem mittleren Äquivalentgewicht von ca. 280, die durch Hydrierung von dimeren Fettsäuren bzw. durch Polymerisation von ungesättigten Fettalkoholen erhalten werden, durch eine sehr hohe thermische Beständigkeit in damit ausgerüstetem Holz auszeichnen, die noch erheblich über der der bisher im Holzschutz viel verwendeten Verbindungen Tri-n-butylzinnoxid (TBTO) oder Tri-n-butylzinnaphenat bzw. -linoleat (TBTN, TBTL) liegt.

Gegenstand der Erfindung sind demnach die genannten Verbindungen, insbesondere die Umsetzungsprodukte mit dem Hydrierungsprodukt von dimeren Fettsäuren oder Fettsäureestern, vorzugsweise der dimeren Tallölfettsäure bzw. durch Polymerisation von ungesättigten Fettalkoholen erhaltenen zweiwertigen Alkoholen, vorzugsweise mit Kettenlängen von $C_{24}$ bis $C_{48}$, sowie biozide Mittel, die diese Verbindungen als aktive Wirkstoffe enthalten.

Weiterhin ist Gegenstand der Erfindung die Verwendung dieser Mittel zur Bekämpfung von Pilzen, Algen, Bakterien und Unterwasserbewuchsorganismen sowie insbesondere die Verwendung der Mittel im Holzschutz zur Bekämpfung von holzschädigenden Organismen.

Die erfindungsgemäß einzusetzenden mehrwertigen Alkohole sind Hydrierungsprodukte von dimeren Fettsäuren mit Hydroxylzahlen von ca. 186 - 210, welche allgemein auch als Dimerdiole bekannt sind.

Der Ausdruck dimerisierte Fettsäure bezieht sich in allgemeiner Form auf polymerisierte Säuren, die aus "Fettsäuren" erhalten werden. Der Ausdruck "Fettsäure" umfaßt ungesättigte natürliche und synthetische einbasige alipha-

...

tische Säuren mit 12 – 22 Kohlenstoffatomen, bevorzugt 18 Kohlenstoffatomen. Diese Fettsäuren lassen sich nach bekannten Verfahren polymerisieren (vgl. DE-OS 14 43 938, DE-OS 14 43 968, DE-PS 21 18 702 und DE-PS 12 80 852).

Typische im Handel erhältliche polymere Fettsäuren haben etwa folgende Zusammensetzung:

| monomere Säuren | (Mo) | 5 – 15 Gewichtsprozent |
| dimere Säuren | (Di) | 60 – 80 Gewichtsprodent |
| trimere Säuren | (Tri) | 10 – 35 Gewichtsprozent |

Der Gehalt an dimerer Säure kann durch allgemein bekannte Destillationsverfahren bis auf 100 Gewichtsprozent erhöht werden.

Die Hydrierung der dimeren Fettsäuren zu den entsprechenden Alkoholen erfolgt nach bekannten Verfahren (DE-OS 17 68 313).

Die erfindungsgemäß verwendeten mehrwertigen Alkohole sind ebenfalls durch Polymerisierung ungesättigter Fettalkohole in Gegenwart von Katalysatoren herstellbar DE-AS 12 07 371, DE-AS 11 98 348).

Bevorzugte Ausgangsstoffe sind hier mehrfach ungesättigte Fettalkohole mit 12 – 24 Kohlenstoffatomen im Molekül sowie ihre Gemische mit einfach olefinisch ungesättigten und gesättigten Alkoholen entsprechender Kettenlänge, wie z. B. Allylalkohol. Derartige Gemische, insbesondere solche mit hohem Anteil an mehrfach ungesättigten $C_{18}$-Alkoholen, können in bekannter Weise aus stark ungesättigten trocknenden oder nichttrocknenden Ölen durch Reduktion der darin enthaltenden Fettsäuren, wie z. B. Leinölfettsäure, Sojaölfettsäure, Tallölfettsäure, Baumwollsaatöl gewonnen werden. Der Gehalt des Ausgangsmaterials an mehrfach ungesättigten Fettalkoholen soll wenigstens 5 Gew.-%, vor

...

zugsweise mehr als 10 Gew.-%, betragen. In solchen Fällen, in denen der Gehalt des Ausgangsmaterials an ungesättigten Alkoholen relativ hoch, d. h. oberhalb 40 - 50 % liegt, kann eine Isomerisierung unter Ausbildung konjugierter Doppelbindungen (z. B. durch Erhitzen in Gegenwart starker Alkalien) erfolgen.

Die Polymerisation wird zweckmäßigerweise unter Druck in einem Autoklav durchgeführt und das Reaktionsgemisch nachfolgend in üblicher Weise durch Filtration und Destillation aufbereitet. Es werden zwei- oder mehrwertige Alkohole erhalten, die als gelbgefärbte, klare Flüssigkeiten vorliegen. Sie bestehen zu 75 - 90 % aus dimeren Diolen und zu 25 - 10 % aus höhermolekularen, vornehmlich trimeren dreiwertigen Alkoholen, wobei je nach Destillationsart auch noch Anteile an monomeren einwertigen Alkoholen vorhanden sein können.

Diese Alkohole werden als Handelsprodukte von den verschiedenen Herstellern unter deren jeweiligen Produktnamen auf dem Markt angeboten.

Die erfindungsgemäßen Verbindungen lassen sich nach an sich bekannten Verfahren durch Umsetzung von im wesentlichen stöchiometrischen Mengen Tri-n-butylzinnoxid und den entsprechenden Alkoholen herstellen, indem man die Reaktionspartner in geeigneten Lösungsmitteln, wie Xylol oder Toluol, unter Rückfluß erhitzt und das Reaktionswasser azeotrop abdestilliert. Wird als Ausgangsprodukt Tri-n-butylzinnchlorid eingesetzt, wird analog verfahren und die entstehende wässrige Salzsäure azeotrop entfernt bzw. durch Zugabe von Alkalihydroxiden gebunden.

Aufgrund ihrer ausgezeichneten bioziden Eigenschaften und ihrer hohen Beständigkeit verleihen die erfindungsgemäßen Verbindungen damit ausgerüsteten Materialien eine hohe biozide Dauerwirkung. Sie können daher als Wirkstoff in Holz- und Textilschutzmitteln, Desinfektionsmitteln oder auch zur Konservierung von Farben, Leimen, Dichtungsmitteln und Bohrölen sowie als Antifoulingwirkstoffe eingesetzt werden.

Die erfindungsgemäßen Mittel lassen sich insbesondere für den Holzschutz einsetzen, da hierdurch neben der Verhinderung des Abbaus durch holzzerstörende Pilze auch ein Schutz gegen holzverfärbende Pilze und Bakterienbefall erreicht wird. Bakterien bewirken keinen Abbau des Holzes, können aber einen Angriff durch Pilze begünstigen.

Die Mittel werden in Form von Lösungen, gegebenenfalls mit Farb- und Hilfsstoffen, in das Holz durch Streichen, Spritzen, Sprühen oder Tauchen eingebracht.

Des weiteren lassen sich die erfindungsgemäßen Mittel für die biozide Ausrüstung von Textilien, Kunststoffen und Baustoffen einsetzen, wobei sie zweckmäßig in Form von Zubereitungen wie Lösungen, Emulsionen, Dispersionen mit und ohne Bindemittel oder mit festen Trägerstoffen bzw. Verdünnungsmitteln und gegebenenfalls mit Zusatz von Netz-, Haft-, Emulgier- und Dispergierhilfsmitteln angewandt werden.

Die Wirkstoffkonzentrationen liegen im allgemeinen im Bereich von 0,05 bis 50 Gew.-% und werden durch die Anforderungen der Anwendung und die Aufnahmefähigkeit der Substrate bestimmt.

Für den Holzschutz werden bevorzugt Lösungen der erfindungsgemäßen Mittel in Benzinfraktionen, gegebenenfalls mit Zusatz von Penetrationsfördermitteln, Bindemitteln oder anderen Lösungsmitteln, in Konzentrationen von 0,05

...

bis 5 Gew.-% verwendet und in Mengen von 50 bis 400 g Wirkstofflösung je m² Holzoberfläche durch Streichen, Spritzen und dergleichen aufgebracht.

Ein sehr wirkungsvoller Holzschutz wird erreicht, wenn die erfindungsgemäßen Mittel, gelöst in geeigneten Substanzen, durch spezielle technische Verfahren, z. B. Doppelvakuumverfahren, Vakuumverfahren oder Vakuumdruckverfahren, in das Holz eingebracht werden, so daß eine Beladung von 0,1 bis 3,0 - vorzugsweise 0,3 bis 1,0 - kg Wirkstoff je m³ Holz erreicht wird.

Mit den erfindungsgemäßen Mitteln lassen sich durch Abmischung mit geeigneten Emulgatoren, z. B. nichtionogenen Typen, auch wasserverdünnbare Formulierungen erstellen, die ebenfalls für den Holzschutz eingesetzt werden können, z. B. durch Streichen, Tauchen usw. mit Emulsionen, die 0,5 bis 3 Gew.-% Wirkstoff enthalten.

Zum Schutz von Holzwerkstoffen können die erfindungsgemäßen Mittel in Form von hochkonzentrierten Lösungen bzw. Formulierungen mit Emulgatoren dem Bindemittel oder Klebstoff in Mengen von 0,1 bis 2 Gew.-%, bezogen auf Wirkstoff, zugesetzt werden.

Zum Schutz von Textilien, z. B. Baumwollgeweben, gegen Mikroorganismen lassen sich die Mittel aus Lösungen, z. B. in Ethanol, Xylol, Ketonen, mit Wirkstoffkonzentrationen von 0,05 bis 3 Gew.-% mittels Sprühen oder Tränken aufbringen, wobei gegebenenfalls Hydrophobierungsmittel zugesetzt werden können.

Zur Erweiterung des Wirkstoffspektrums, zur Erzielung besonderer Wirkung gegen spezielle Mikroorganismen oder zur

...

insektiziden Ausrüstung lassen sich die erfindungsgemäßen Mittel mit anderen Wirkstoffen kombinieren, z. B. sind hierzu geeignet:

3-Jod-2-propynyl-butyl-carbamat,
Kupfernaphthenat,
Kupfer-8-oxychinolin,
N-Cyclohexyl-N-methoxy-2,5-dimethyl-furan-3-carbonsäureamid,
N,N-Dimethyl-N'-phenyl-N'-fluordichlormethyl-thiosulfonyl-diamid,
N-Trichlormethylthio-phthalimid,
$\gamma$-Hexachlorcyclohexan,
Permethrin.

...

ı

## Herstellungsbeispiele
————————————————————

### Beispiel 1

1 Mol Dimerdiol auf Tallölfettsäure-Basis (570 g) mit einem Äquivalentgewicht von 285 und einer Hydroxylzahl von 197 werden mit einem Mol TBTO (598 g) in ca. 1.000 ml Xylol unter Rückfluß erhitzt. Innerhalb von ca. 3 h wird das entstehende Reaktionswasser azeotrop abdestilliert. Nach dem Abtrennen des Lösungsmittels erhält man ein gelbliches, mittelviskoses Produkt mit einem Zinngehalt von 20,0 %. Das Produkt (TBT-DD) ist in organischen Lösungsmitteln wie Alkoholen, Ketonen, chlorierten Kohlenwasserstoffen und Benzinen leicht löslich, in Wasser dagegen schwer löslich.

### Beispiel 2

540 g eines mehrwertigen Alkohols (Dimerisationsprodukt eines hydrierten Leinölfettsäuremethylesters mit einer Hydroxyl zahl von 208 und einer Jodzahl von 120) werden mit einem Mol TBTO (598 g) in ca. 1.000 ml Xylol unter Rückfluß erhitzt. Innerhalb von ca. 4 h wird das entstehende Reaktionswasser azeotrop abdestilliert. Nach dem Abtrennen des Lösungsmittels erhält man ein gelb gefärbtes mittelviskoses Produkt mit einem Zinngehalt von 20,7 %. Das Produkt (TBT-DA) ist in organischen Lösungsmitteln wie Benzinen, Alkoholen, chlorierten Kohlenwasserstoffen und Ketonen leicht löslich, in Wasser dagegen schwer löslich.

...

Formulierungsbeispiele

Beispiel 1

Eine farblose, wenig Bindemittel enthaltende Holzschutz-grundierung, bestehend aus

    2,0 Gew.-Tl. Reaktionsprodukt aus Herstellungsbeispiel 1
    0,2  "   "   Permethrin 25 - 75
    6    "   "   Diäthylenglykolmonobutyläther
    7    "   "   langöliges Alkydharz (ca. 33 % Phthalat-
                 harz, ca. 67 % Triglyceride pflanzlicher
                 Fettsäuren)
  84,8  "   "   White spirit

zeigt ein gutes Eindringvermögen und läßt sich sehr gut
als Holzschutzgrundierung für Bauholz verwenden.

Beispiel 2

Eine farbige Holzschutz-Lasur, bestehend aus

    3    Gew.-Tl. Reaktionsprodukt aus Herstellungsbeispiel 1
   40     "   "   langöliges Alkydharz (ca. 33 % Phthalat-
                 harz, ca. 67 % Triglyceride pflanzlicher
                 Fettsäuren)
    0,5  "   "   Sikkative (Co-, Mn-, Pb-Salze)
    0,6  "   "   Antiabsetzmittel
    9,0  "   "   Eisenoxidrotpaste
    1,0  "   "   Eisenoxidschwarzpaste
    6,6  "   "   Diäthylenglykolmonobutyläther
  39,3  "   "   White spirit.

Beispiel 3

Eine wasserverdünnbare Wirkstoffkombination, bestehend
aus

18 Gew.-Tl. Reaktionsprodukt aus Herstellungsbeispiel 2
4,5 " " N,N'-Dimethyl-N-phenyl-N'-fluordichlormethyl-
thiosulfonyldiamid
77,5 " " nichtionogener Emulgator

läßt sich in weiten Bereichen (1 : 5 bis 1 : 50) mit Wasser
verdünnen und ergibt stabile Emulsionen zum Streichen,
Spritzen oder Tauchen von z. B. frisch geschlagenem Holz.
Die unverdünnte Formulierung wird in Konzentrationen von 0,2
bis 3 Gew.-% zur bioziden Ausrüstung von wässrigen Anstrichsystemen, z. B. Dispersionen auf Acrylat-Basis, eingesetzt.

Beispiel 4

Eine Wirkstofflösung zur bioziden Ausrüstung von Textilien,
z. B. Baumwollsegeltuch, bestehend aus

2,5 Gew.-Tl. Reaktionsprodukt aus Herstellungsbeispiel 2
3,6 " " mikronisiertes Polyethylenwachs
93,9 " " geruchsarmes, synthetisches Isoparaffin

läßt sich entweder durch Sprühen der Lösung oder durch Tauchen der zu behandelnden Materialien aufbringen.

Untersuchung der Beständigkeit in Holz

Die Dauerbeständigkeit von bioziden Holzschutzmitteln läßt sich in Lagerversuchen bestimmen. Hierbei werden Holzklötzchen aus Kiefernsplintholz in den Größen 5,0 x 2,5 x 1,5 cm mit Lösungen der zu prüfenden Biozide getränkt und nach dem Verdunsten des Lösungsmittels 4 Wochen bei 20 °C und anschließend 2 Wochen bei 80 °C gelagert.

Danach zerkleinert man die Holzklötzchen und extrahiert sie 24 h mit Äthanol/HCl-Lösung (0,3 % HCl).

In den Extrakten werden sowohl Gesamtzinn als auch der Tributylzinngehalt bestimmt.

Tabelle 1

Abbaubeständigkeit der Tributylzinnverbindungen

| Tränk-lösung | aufgenommene Menge Sn | TBT-Gehalt der Aus-gangsstoffe | Extrakt | |
|---|---|---|---|---|
| | | | Gesamtzinn-gehalt | TBT-Gehalt der Extrakte |
| TBTO | 28,0 mg | 97,0 % | 26,9 mg | 40,0 % |
| TBTN | 27,0 mg | 95,0 % | 24,7 mg | 47,0 % |
| TBT-DD | 26,8 mg | 96,0 % | 26,1 mg | 81,0 % |
| TBT-DA | 24,2 mg | 96,1 % | 22,4 mg | 76,0 % |

TBT-DD = Tri-n-butylzinn-Dimerdiol-Verbindung (aus Beispiel 1)

TBT-DA = Tri-n-butylzinn-Dimeralkohol-Verbindung (aus Beispiel 2).

...

0210389

Während die Tri---butylzinnverbindungen TBTO und TBTN infolge der Belast_ng durch den Dauerversuch eine Abnahme der Tributylzinn_ehalte bis auf 40 - 48 % aufweisen, ist die Abnahme bei TBT-DD bzw. TBT-DA wesentlich geringer. Es sind nach dem Lagertest noch über 75 % Tributylzinnverbindung erhalten geblieben.

Biozide Wirkung

Die erfindungsgemäßen Tributylzinnverbindungen besitzen eine sehr starke biozide Wirkung gegen zahlreiche Bakterien und Pilze.

Zur Bestimmung der bioziden Wirkung werden Papierrundfilter mit einem Durchmesser von 5,5 cm in abgestuften Konzentrationen der Tributylzinnverbindung in Äthanol getränkt und nach dem Trocknen im Agar-Auflegetest gegen Pilze und Bakterien untersucht. Als Maß für die biozide Wirkung dient die Größe der Hemmzone um die Probe (angegeben in mm).

~ _Tabelle 2_

Biozide Wirkung der Tributylzinnverbindungen (Agar-Auflegetest)

(Hemmzonen um die Proben in mm)

| Wirk-stoff | Gew.-% in Tränk-lösung * | Bakterien | | | Poria mont. | Pilze | | |
| --- | --- | --- | --- | --- | --- | --- | --- | --- |
| | | Bacillus subtilis | Bacillus mesent. | Proteus vulgaris | | Cladosp. herbarum | Aureobas. pullulans | Trichoderma viride |
| TBTO | 0,5 | 2 -- 3 | 3 - 4 | 0 - 1 | 5 - 7 | 3 - 4 | 1 - 2 | 0 - 1 |
| | 1,0 | 5 - 6 | 5 - 6 | 2 - 3 | 8 - 10 | 6 - 8 | 3 - 4 | 2 - 3 |
| | 1,5 | 10 - 12 | 10 - 12 | 4 - 5 | 12 - 15 | 8 - 10 | 5 - 6 | 4 - 6 |
| TBTN | 1,0 | 1 - 2 | 2 - 3 | 0 | 3 - 4 | 1 - 2 | 0 - 1 | 0 |
| | 2,0 | 3 - 4 | 3 - 4 | 1 - 2 | 5 - 7 | 4 - 5 | 1 - 2 | 0 - 1 |
| | 3,0 | 5 - 7 | 8 - 10 | 2 - 3 | 8 - 10 | 6 - 8 | 2 - 3 | 2 - 3 |

_Tabelle 2_    (Fortsetzung)

Biozide Wirkung der Tributylzinnverbindungen (Agar-Auflegetest)

(Hemmzonen um die Proben in mm)

| Wirk-stoff | Gew.-% in Tränk-lösung * | Bakterien | | | Poria mont. | Cladosp. herbarum | P i l z e | Trichoderma viride |
| | | Bacillus subtilis | Bacillus mesent. | Proteus vulgaris | | | Aureobas. pullulans | |
|---|---|---|---|---|---|---|---|---|
| TBT | 1,0 | 1 – 2 | 2 – 3 | 0 – 1 | 3 – 4 | 1 – 2 | 0 – 1 | 0 |
|  | 2,0 | 3 – 4 | 4 – 5 | 1 – 2 | 4 – 5 | 4 – 6 | 1 – 2 | 1 – 2 |
|  | 3,0 | 5 – 8 | 7 – 8 | 3 – 4 | 6 – 8 | 6 – 8 | 2 – 4 | 3 – 4 |
| TBT-DA | 1,0 | 1 – 2 | 2 – 3 | 0 | 4 – 5 | 2 – 3 | 0 – 1 | 0 |
|  | 2,0 | 3 – 4 | 3 – 4 | 1 – 2 | 4 – 5 | 4 – 5 | 1 – 2 | 0 – 1 |
|  | 3,0 | 6 – 7 | 6 – 8 | 2 – 3 | 7 – 8 | 5 – 6 | 2 – 3 | 2 – 3 |
| ohne | 0 | 0 | 0 | 0 | 0 | 0 | 0 | 0 |

*) Konzentrationen entsprechend den TBT-Gehalten

TBT-DD = Tri-n-butylzinn-Dimerdiol-Verbindung (aus Beispiel 1)
TBT-DA = Tri-n-butylzinn-Dimeralkohol-Verbindung (aus Beispiel 2)

Patentansprüche

1. Tri-n-butylzinnverbindungen, erhältlich durch Umsetzung von Tri-n-butylzinnoxid oder Tri-n-butylzinnhalogeniden mit zweiwertigen Alkoholen mit einer mittleren Hydroxylzahl von ca. 200 und einem mittleren Äquivalentgewicht von ca. 280, die durch Hydrierung von dimeren Fettsäuren oder Fettsäureestern bzw. durch Polymerisation von ungesättigten Fettalkoholen erhalten werden.

2. Tri-n-butylzinnverbindung gemäß Anspruch 1, dadurch gekennzeichnet, daß der zweiwertige Alkohol durch Hydrierung von dimeren Tallölfettsäuren erhalten wird.

3. Tri-n-butylzinnverbindungen gemäß Anspruch 1, dadurch gekennzeichnet, daß der zweiwertige Alkohol durch Polymerisierung von ungesättigten Fettalkoholen erhalten wird.

4. Biozide Mittel, dadurch gekennzeichnet, daß sie als aktiven Wirkstoff eines oder mehrere der Umsetzungsprodukte nach den Ansprüchen 1 bis 3 enthalten.

5. Verwendung der bioziden Mittel gemäß Anspruch 4 zur Bekämpfung von Bakterien, Pilzen, Algen und Unterwasserbewuchsorganismen.

6. Verwendung der bioziden Mittel gemäß Anspruch 4 im Holzschutz zur Bekämpfung von holzschädigenden Mikroorganismen.